(19) Europäisches Patentamt
European Patent Office
Office européen des brevets

(11) **EP 1 940 139 B1**

(12) **FASCICULE DE BREVET EUROPEEN**

(45) Date de publication et mention de la délivrance du brevet:
**22.05.2013 Bulletin 2013/21**

(51) Int Cl.:
***H04M 9/08*** *(2006.01)*

(21) Numéro de dépôt: **07123873.7**

(22) Date de dépôt: **20.12.2007**

(54) **Commande de filtres d'annulation d'écho**

Steuerung von Echounterdrückungsfiltern

Control of echo suppression filters

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **28.12.2006 FR 0611485**

(43) Date de publication de la demande:
**02.07.2008 Bulletin 2008/27**

(73) Titulaire: **FRANCE TELECOM**
**75015 Paris (FR)**

(72) Inventeurs:
• **Guerin, Alexandre**
**35000 Rennes (FR)**
• **Garcia, Jean-Luc**
**22300 Lannion (FR)**

(74) Mandataire: **Cabinet Plasseraud**
**52, rue de la Victoire**
**75440 Paris Cedex 09 (FR)**

(56) Documents cités:
**EP-A1- 0 854 626    US-A1- 2004 161 101**
**US-B1- 6 570 986**

**Description**

La présente invention concerne la commande de filtres d'annulation d'écho.

Dans de nombreux systèmes et équipements de communication, il se pose un problème d'écho, c'est-à-dire des situations dans lesquelles un signal acoustique est émis et simultanément, totalement ou partiellement acquis puis, restitué à l'émetteur initial sous la forme d'un écho.

Ce type de situation se présente lors de communications mettant en oeuvre des équipements comprenant un haut-parleur pour émettre un signal acoustique et un microphone situé a portée du haut-parleur tels que des équipements compacts ou de type « mains libres ». Du fait de la proximité entre le haut-parleur et le microphone, le microphone est susceptible d'acquérir le signal émis par le haut-parleur. Ainsi, un locuteur distant entend sa propre voix retardée par le délai introduit par la chaîne de communication.

Afin de pallier à ce problème, les terminaux utilisent des filtres d'annulation d'écho. De manière générale, un écho est estimé à partir du signal émis et est déduit du signal microphonique.

Dans la pratique, ceci est souvent réalisé par des filtres adaptatifs appliqués sur le signal microphonique. De manière générale, un filtrage adaptatif consiste à donner une expression d'évolution de coefficients du filtre dans le temps, cette expression devant répondre à un critère de convergence. Plusieurs algorithmes sont utilisés en annulation d'écho comme, par exemple, les algorithmes dits LMS (en anglais : Least Mean Square) ou encore NLSM (en anglais Normalized LMS) ou d'autres algorithmes bien connus de l'homme de l'art et décrits notamment dans le document Simon S. Haykin, « Adaptive Filter Theory », Prentice Hall (September 2001).

Afin de filtrer convenablement l'écho et de ne pas introduire de distorsion sur le signal restitué, il faut commander différemment les filtres d'annulation d'écho lorsqu'il y a un écho et lorsqu'il n'y en a pas. Plus précisément, il faut autoriser les modifications des paramètres des filtres uniquement en période d'écho seul et il faut éviter de modifier les paramètres des filtres dans les situations où il n'y a pas d'écho ainsi que dans les situations dites de double parole, c'est-à-dire les cas où le signal microphonique comporte un composante d'écho et une composante de signal utile.

La discrimination de ces situations est un problème complexe. En effet, il est relativement simple de détecter les périodes d'absence d'écho du fait de l'absence de signal sur le haut-parleur mais, il est très difficile de distinguer les situations d'écho seul des situations de double parole. Or, la performance des algorithmes adaptatifs d'annulation d'écho dépend très fortement de la capacité à distinguer ces phases.

Des solutions existantes se fondent sur une comparaison entre des propriétés du signal émis et ces mêmes propriétés évaluées sur le signal microphonique.

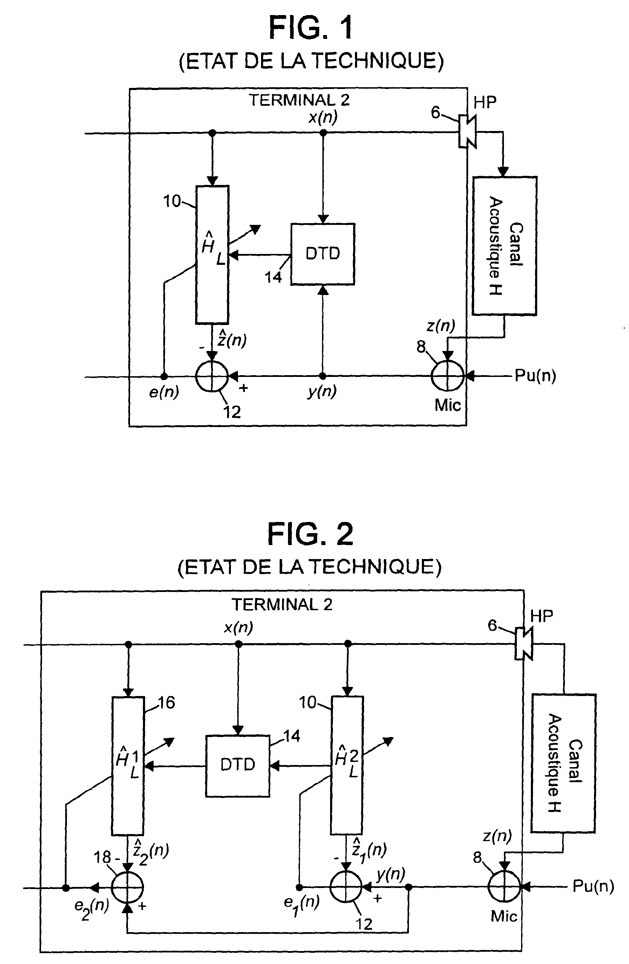

Un exemple d'un système classique est représenté en référence à la figure 1 sur laquelle est représenté schématiquement un terminal 2. Des signaux acoustiques sont véhiculés vers ce terminal de manière classique, par exemple, par voie hertzienne ou à l'aide de tout réseau de communication approprié.

Le terminal reçoit un signal x(n) du réseau tel qu'un signal de parole. Ce signal x(n) est diffusé sur un haut-parleur 6. Le signal émis par le haut-parleur 6 est transformé par le canal acoustique H correspondant à l'environnement du terminal 2.

Dans le terminal 2, un microphone 8 enregistre le signal local y(n), composé d'un signal utile pu(n) correspondant par exemple au signal de parole émis par un locuteur, additionné à une partie du son émis par le haut parleur : l'écho acoustique. Cet écho est le résultat de la convolution du signal diffusé par le haut parleur 6 par le canal acoustique H et dépend des dimensions du terminal, des matériaux utilisés, de l'environnement et d'autres paramètres.

Le signal y(n) acquis par le microphone 8 est ensuite renvoyé vers un filtre adaptatif d'annulation d'écho 10. Ce filtre 10 est utilisé pour générer un écho estimé $\hat{z}(n)$ qui est déduit du signal microphonique dans un mixeur 12.

Dans l'exemple décrit, le terminal 2 comprend une boucle de rétroaction classique à partir du mixer 12 afin que les coefficients du filtre 10 soient modifiés pour faire diminuer la différence entre l'écho et le signal microphonique.

Le filtre adaptatif 10 est noté $\hat{H}_L$ et est un filtre de longueur L, dont les coefficients $\{\hat{h}_i(n)\}_{i=0,...,L-1}$ sont adaptés dans le temps et indexés par l'indice temporel n. Ce filtre génère le pseudo-écho $\hat{z}(n)$. L'écho résiduel e(n) résulte de la soustraction de $\hat{z}(n)$ au signal microphonique $y(n)$ dans le mixer 12. On a alors les expressions suivantes :

$$\hat{z}(n) = \sum_{i=0}^{L-1} \hat{h}_i(n)x(n-i)$$

$$e(n) = y(n) - \hat{z}(n)$$

Dans l'exemple, un algorithme dit LMS est utilisé avec comme critère la minimisation de la puissance de l'écho résiduel selon l'équation suivante :

$$\hat{H}_L(n) = \hat{H}_L(n-1) + \mu \cdot e(n) \cdot X(n)$$

Dans cette équation $\hat{H}_L(n) = [\hat{h}_0(n), \hat{h}_1(n), \cdots, \hat{h}_{L-1}(n)]^T$ est le vecteur des L coefficients du filtre adaptatif à l'instant n , et $X(n) = [x(n), x(n-1), \cdots, x(n-L+1)]^T$ est le vecteur des L derniers échantillons du signal émis vers le haut parleur 6. Le terme $\mu$ est un facteur appelé « pas d'adaptation » qui contrôle la rapidité de convergence.

Le rôle de $\mu$ est important dans le contrôle de la stabilité du filtre. Dans les situations d'écho seul, le filtre peut être adapté de façon à converger rapidement. En l'absence d'écho, l'adaptation des coefficients n'est pas souhaitable car cela peut mener à la désadaptation du filtre adaptatif, et finalement à des remontées d'écho perceptibles. De même, dès lors que le locuteur local est actif, que ce soit en situation de parole seule ou de double parole, il convient de figer l'adaptation du filtre d'annulation d'écho 10.

Dans le cas contraire, le filtre 10 cherche à supprimer la parole utile et se désadapte. Outre les risques de divergence du filtre, cela mène à de fortes dégradations du signal utile et à la réapparition d'écho, voire à son amplification.

Le terminal 2 comporte également un module 14 de commande du filtre 10, également appelé module de détection de double parole ou DTD. Ce module 14 analyse les signaux x(n) et y(n) afin d'extraire une décision qui permet de figer l'adaptation du filtre 10, notamment en période de double parole.

Le système décrit en référence à la figure 1 utilise une comparaison directe des signaux émis et reçus. Ceci ne permet toutefois pas une commande optimale du fait des modifications induites par le canal acoustique H.

Afin d'améliorer la détection des situations de double parole, certains procédés de commande de filtres adaptatifs d'annulation d'écho analysent les propriétés du canal. C'est le cas notamment du document P. Ahgren, « On system identification and acoustic echo cancellation », Thesis UPPSALA Universitet (April 2004) qui utilise deux filtres $\hat{H}_L^1$ et $\hat{H}_L^2$. Un schéma d'un tel système est représenté sur la figure 2.

Sur cette figure, les éléments similaires à ceux décrits en référence à la figure 1 portent les mêmes numéros de référence. On reconnaît le terminal 2 avec le filtre adaptatif 10 et le mixeur 12 ainsi que le haut-parleur 6 et le microphone 8, séparés par le canal acoustique H.

Dans ce mode de réalisation, on reconnaît également le module 14 de détection de double parole. Le terminal 2 comporte toutefois un second filtre adaptatif 16. Le filtre 10 situé en amont du module 14 de détection de double parole tandis que le filtre 16 est situé en aval du module 14, par rapport au sens de traitement du signal microphonique.

Le filtre 10 est adapté en permanence grâce à l'utilisation d'une boucle de contre-réaction mise en oeuvre de manière classique pour réduire le résidu calculé par le mixeur 12 entre le pseudo-écho et le signal microphonique.

Le filtre 16 est également adapté suivant une boucle de rétroaction, cette adaptation étant pilotée par la décision du module 14 de détection de double parole. Si le module 14 détecte la présence de parole locale, il peut être décidé, par exemple, de figer le filtre 16 ou tout autre décision souple permettant de ralentir l'adaptation suivant le degré de probabilité de présence de parole locale. C'est le filtre 16 qui sert à estimer l'écho $\hat{z}_2(n)$ qui est ensuite soustrait du signal microphonique par un mixer 18.

En période d'écho seul, lorsque le canal acoustique H ne varie pas de façon brutale, l'évolution des coefficients du filtre 10 ralentit au fur et à mesure que les coefficients convergent. Dès que la double parole est présente, les coefficients du filtre 10, qui est adapté en permanence, sont largement modifiés par la présence de la parole utile.

Lorsque ces coefficients varient rapidement et fortement, la probabilité d'être dans une situation de double parole est importante.

Pour des raisons de simplicité de mise en oeuvre, la variance n'est calculée que pour la plus grande valeur des coefficients du filtre adaptatif $\hat{H}_L^1$ :

$$\gamma = \max_{h_i^1}(h_1^1, ... h_L^1) /$$

où $h_i^1$ signifie qu'il s'agit des coefficients du filtre 10 adapté en permanence. Ce document propose de comparer la variance de $\gamma$ à un seuil fixe. Ainsi, en présence d'écho, une forte variance signale la présence d'un signal de parole utile, et par conséquent, une période de double parole potentielle. Dès lors, les coefficients $h_i^1$ du filtre 10 ne sont plus recopiés vers le second filtre 16 dont l'évolution est figée.

Un tel système ne permet toutefois pas de faire la différence entre une variation du canal acoustique et l'apparition d'une situation de double parole. Ces phénomènes ont le même impact sur l'évolution des coefficients du filtre adaptatif 16 utilisé pour calculer le pseudo-écho qui est soustrait du signal microphonique.

Le document US 2004/0161101 décrit un dispositif de suppression d'échos comprenant deux filtres en parallèle ainsi qu'un contrôleur. The contrôleur détermine le meilleur parmi les deux filtres pour la suppression final de l'écho.

Le document EP 0 854 626 décrit un annuleur d'échos adaptatif dans lequel un signal de réception est appliqué en entrée d'un système générateur d'écho et un signal d'observation est obtenu en sortie du système.

Ainsi, les procédés et systèmes existants ne sont pas entièrement satisfaisants en ce qui concerne la commande de filtres d'annulation d'écho notamment, du fait de la détection imparfaite des situations de double parole.

Un des objets de l'invention est d'améliorer cette situation grâce à un procédé et un dispositif de commande de filtres d'annulation d'écho.

À cet effet, l'invention a pour objet un procédé de commande d'un filtre d'annulation d'écho comprenant :

- une détermination de coefficients d'un filtre adaptatif représentatif d'un canal acoustique entre un signal acoustique émis et un signal microphonique
- un lissage temporel des coefficients dudit filtre adaptatif;
- une détermination d'un écho estimé par le filtrage du signal acoustique émis avec lesdits coefficients lissés;
- une estimation de propriétés dudit écho estimé ;
- une estimation des mêmes propriétés sur le signal microphonique ;
- une comparaison entre lesdites propriétés de l'écho estimé et lesdites propriétés du signal microphonique pour évaluer la présence d'un signal autre qu'un signal d'écho dans le signal microphonique ; et
- une commande du filtre d'annulation d'un écho dans le signal microphonique, en fonction de ladite comparaison.

L'utilisation de propriétés de l'écho estimé permet une analyse plus pertinente pour évaluer la présence d'un écho et la présence d'un signal autre qu'un signal d'écho et donc permet de détecter les situations de double parole potentielles.

En outre, le procédé compare les signaux émis et reçus entre eux tout en prenant en compte le canal acoustique.

Le procédé permet également d'obtenir directement l'estimation du canal acoustique et le lissage des variations dans le temps de ce canal rend le procédé robuste aux variations rapides du canal acoustique.

Dans un mode de réalisation particulier, ladite estimation de propriétés de l'écho estimé et ladite estimation de propriétés du signal microphonique comprennent chacune une modélisation auto-régressive. L'utilisation d'un modèle auto-régressif permet de suivre l'évolution des signaux de manière efficace.

Avantageusement, la modélisation auto-régressive du signal microphonique comprend l'application, au signal microphonique, des paramètres de la modélisation auto-régressive de l'écho estimé. Ainsi, il n'est pas nécessaire de procéder à l'identification des paramètres du modèle AR du signal microphonique et la comparaison des propriétés se fait par l'évaluation de la pertinence du modèle de l'écho estimé appliqué au signal microphonique.

Dans un mode de réalisation particulier, ladite estimation de propriétés de l'écho estimé comprend en outre la détermination d'un résidu de prédiction issu d'une prédiction de l'écho estimé par le modèle auto-régressif correspondant et ladite estimation de propriétés du signal microphonique comprend en outre la détermination d'un résidu de prédiction issu d'une prédiction du signal microphonique par le modèle auto-régressif. Ces résidus sont ainsi directement comparables et permettent de caractériser la similitude entre l'écho estimé et le signal microphonique. Par exemple, le degré de similitude peut être évalué par comparaison des énergies des résidus de prédiction.

Dans une variante, la comparaison des propriétés de l'écho estimé et des propriétés du signal microphonique comprend la formation d'un indicateur représentant la probabilité que le signal microphonique comprenne uniquement un signal d'écho correspondant au signal émis. Cet indicateur permet ainsi de détecter les périodes de double parole potentielles.

Avantageusement, ladite commande d'un filtre d'annulation comprend le contrôle des variations dudit filtre en fonction de la présence d'un signal autre que le signal d'écho dans le signal microphonique. Ceci permet notamment de figer les filtres adaptatifs en cas de double parole potentielle.

L'invention a également pour objet un programme correspondant ainsi qu'un dispositif de commande d'un filtre d'annulation d'écho et un système ainsi qu'un terminal comprenant un tel dispositif.

L'invention sera mieux comprise à la lumière de la description faite à titre d'exemple et en référence aux figures indexées sur lesquels :

-- les figures 1 et 2, déjà commentées, représentent des schémas de dispositifs de l'état de la technique ;

-- la figure 3 est un organigramme d'un procédé selon l'invention;

-- la figure 4 est un schéma d'un dispositif selon l'invention ; et

-- les figures 5A à 5D représentent l'évolution de certains signaux au cours du procédé de l'invention.

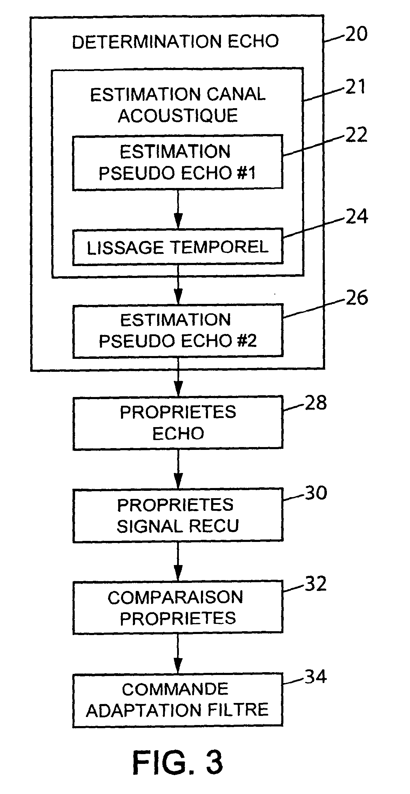

En référence à la figure 3, on va maintenant décrire de manière générale le procédé de l'invention.

Ce procédé est mis en oeuvre au niveau d'un terminal émettant un signal acoustique x(n) par un haut parleur. Ce terminal reçoit également un autre signal acoustique y(n), dit signal microphonique ou signal reçu, et susceptible de comporter un écho du signal acoustique émis.

Le procédé débute par une étape 20 de détermination d'un écho estimé qui comprend une estimation 21 du canal acoustique H.

Dans le mode de réalisation décrit, l'étape 21 comporte une estimation 22 d'un premier pseudo-écho à partir du signal acoustique émis x(n). Cette estimation 22 comprend, par exemple, l'application d'un filtre adaptatif au signal émis et la modification des paramètres de ce filtre par une boucle de contre-réaction. La boucle de rétro-action est mise en oeuvre de manière classique, à partir du signal microphonique, afin de réduire le résidu entre le signal microphonique et le pseudo-écho.

L'estimation 22 permet ainsi d'obtenir une première estimation du canal acoustique H par le biais des coefficients du filtre adaptatif.

L'estimation 22 est suivie de l'estimation du canal acoustique moyen, c'est-à-dire d'un lissage temporel 24 des variations des coefficients du filtre adaptatif. Ainsi, à l'issue de l'étape 22, on dispose d'une évaluation du canal acoustique moyen.

Le procédé continue avec une estimation 26 d'un second pseudo-écho, réalisée à partir du signal acoustique émis et des coefficients du premier filtre adaptatif lissés dans le temps.

Plus précisément, ce second pseudo-écho est obtenu par l'application du filtre constitué des coefficients lissés au signal émis x(n). On obtient ainsi un écho calculé avec une estimation lissée dans le temps du canal acoustique H.

Le procédé comprend ensuite une étape 28 d'estimation de propriétés du second pseudo-écho ainsi qu'une étape 30 d'estimation des mêmes propriétés sur le signal microphonique. Dans le mode de réalisation décrit, les propriétés utilisées sont des propriétés acoustiques obtenues par des modèles auto-régressifs.

Les propriétés du second pseudo-écho et du signal microphonique sont comparées au cours d'une étape 32 afin de former un indicateur de probabilité que la situation soit une situation d'écho pur, c'est-à-dire que le signal microphonique comporte uniquement une composante d'écho. Cet indicateur est utilisé pour commander un filtre d'annulation d'écho lors d'une étape 34.

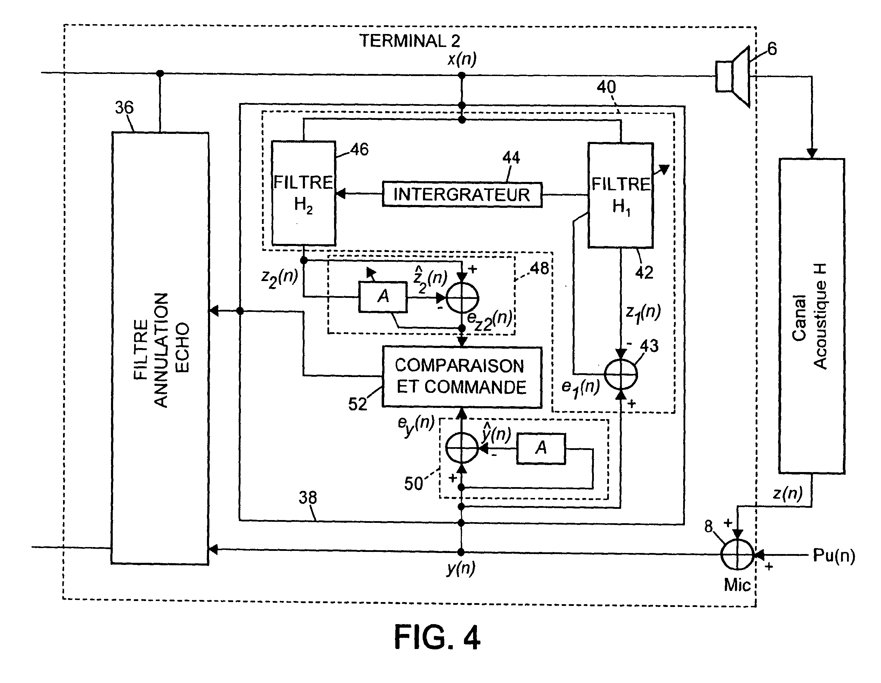

En référence à la figure 4, on va maintenant décrire le détail d'un dispositif mettant en oeuvre le procédé de l'invention.

Comme dans les cas décrits en référence aux figures 1 et 2, ce dispositif ou terminal 2, comporte le haut parleur 6 séparé du microphone 8 par le canal acoustique H.

En outre, le terminal 2 comporte un filtre d'annulation d'écho 36 recevant en entrée le signal émis x(n) ainsi que le signal reçu y(n).

Le terminal comporte un module 38 de commande du filtre d'annulation d'écho, ou module de détection de double parole (DTD).

Ce module 38 comporte une unité 40 de détermination d'un écho estimé qui reçoit en entrée le signal émis x(n) destiné au haut parleur 6 ainsi que le signal microphonique y(n) acquis par le microphone 8.

Dans le mode de réalisation décrit, l'unité 40 comporte tout d'abord un estimateur 42 du premier pseudo-écho mettant en oeuvre l'étape 22 décrite précédemment. Cet estimateur 42 réalise un filtrage adaptatif dont le but est d'estimer la fonction de transfert du canal acoustique H et de suivre ses variations dans le temps. Sa mise en oeuvre repose sur un algorithme adaptatif de type classique tel qu'un algorithme dit LMS (en anglais : Least Mean Square) ou encore NLMS (en anglais : Normalized LMS), APA (en anglais : Affine Projection Algorithm) ou tout autre algorithme équivalent.

Avantageusement, l'estimateur 42 comporte une boucle de rétroaction visant à réduire la différence entre le signal microphonique y(n) et le premier pseudo-écho. Cette différence est appelée écho résiduel et est calculée par un mixeur 43 de manière classique.

Dans cette implémentation, l'algorithme adaptatif choisi pour l'estimateur 42 est un NLMS, dont l'équation d'adaptation est la suivante, avec les mêmes notations que précédemment :

$$H_1(n+1) = H_1(n) + \mu \cdot \frac{X(n)}{X(n)^{\mathrm{T}} X(n)} \cdot e_1(n).$$

Ainsi, un premier pseudo-écho $z_1(n)$ est généré par filtrage du signal émis $x(n)$ avec le filtre adapté $H_1$. Comme cela est indiqué précédemment pour les filtres adaptatifs en général, on note $H_1(n)=[h_{1,0}(n),...,h_{1,L}(n)]^{\mathrm{T}}$ le vecteur des L coefficients du filtre H 1 à l'instant n. En conséquence, le pseudo-écho s'exprime :

$$z_1(n) = \sum_{i=0}^{L-1} h_{1,i}(n)x(n-i).$$

L'écho résiduel $e_1(n)$ délivré par le mixeur 43 est égal au signal microphonique auquel on soustrait le pseudo-écho :

$$e_1(n) = y(n) - z_1(n).$$

Avantageusement, la gestion de l'adaptation du filtre de l'estimateur 42 fait intervenir une expression d'un pas d'adaptation $\mu$ variable qui permet de gérer l'adaptation du filtre. Ainsi, cette technique propose de faire évoluer le terme $\mu$ de convergence dans un intervalle $[\mu_{\min}, \mu_{\max}]$ en fonction des niveaux énergétiques du signal émis $x(n)$ et du signal microphonique $y(n)$ et selon le comportement suivant :

- $\mu(n) \dashrightarrow \mu_{\max}$ en période d'écho seul, afin de faire converger $\hat{H}_L$,

- $\mu(n) \dashrightarrow \mu_{\min}$ en phase de parole utile seule, afin de stabiliser $\hat{H}_L$,

- $\mu(n) \in [\mu_{\min}, \mu_{\max}]$ en phase de double parole. Il faut que $\mu(n) \dashrightarrow \mu_{\min}$ si la parole utile est prépondérante devant l'écho et que $\mu(n) \dashrightarrow \mu_{\max}$ dans le cas contraire.

Pour définir une expression qui satisfasse à ces tendances, il convient de faire l'hypothèse selon laquelle l'énergie de l'écho est globalement plus faible que l'énergie de la parole utile. Une expression de $\mu$ qui satisfasse au comportement souhaité est définie ci-dessous, où *(a, b,c)* sont des paramètres qui dépendent des propriétés du terminal. On note $\sigma^2(n)$ la puissance du signal considéré à l'instant *n*. Ainsi $\mu$ s'exprime :

$$\mu(n) = \frac{a.\sigma_{\mathrm{HP}}^2(n)}{b.\sigma_{\mathrm{HP}}^2(n) + c.\sigma_{\mathrm{Micro}}^2(n)}$$

Tant que l'hypothèse posée est vérifiée, la contribution de l'écho dans $\sigma_{\mathrm{Micro}}^2$ est faible devant celle de la parole utile et cette expression permet d'obtenir le comportement souhaité.

En situation de double parole, l'adaptation du filtre H1 doit être bloquée et le terme $\mu$ est fixé à 0.

Bien entendu, d'autres lois de gestion de l'adaptation sont également possibles telles que celles décrites dans le document P. Scalart, P. Duhamel and A. Benamar, *Process and device for adaptive identification and adaptive echo canceller relating thereto,* United States Patent number 5,734,715 (March 1998).

L'unité 40 comporte également un intégrateur 44 qui met en oeuvre l'étape 24 de lissage temporel.

Cet intégrateur 44 réalise un lissage temporel des coefficients du filtre de l'estimateur 42. En effet, pour une configuration acoustique donnée, on considère que la majorité de l'énergie due au couplage acoustique provient du trajet direct entre le haut parieur 6 et le microphone 8 ainsi que des premières réflexions liées à la structure du terminal.

Par conséquent, ces modifications, qui correspondent au canal acoustique H, sont relativement stables.

Aussi, lorsque le filtre H1 de l'estimateur 42 est en cours d'adaptation, ses coefficients évoluent beaucoup lorsqu'il part d'un état désadapté pour rejoindre l'état adapté, et évoluent peu lorsque le filtre a convergé.

Le lissage permet d'obtenir des coefficients de filtrage correspondant à une estimation du canal acoustique H moins sensible aux perturbations que celle obtenue par les coefficients du filtre H1, notamment lors de l'apparition de la parole au niveau du terminal qui désadapte les coefficients du filtre d'annulation d'écho.

Dans l'exemple, ce lissage temporel est obtenu par l'expression récursive suivante :

$$H_2(n) = \alpha \cdot H_2(n-1) + (1-\alpha)H_1(n)$$

La grandeur de lissage $\alpha$ est choisie constante et égale à $\alpha = 0.96$ . Cette valeur est jugée suffisante pour assurer un compromis entre le suivi des variations du canal acoustique et les occurrences de double parole.

Bien entendu, l'intégration temporelle n'est pas limitée à ce lissage exponentiel et d'autres expressions peuvent être utilisées.

L'estimateur 42 et l'intégrateur 44 délivrent ainsi une estimation du canal acoustique moyen, mettant en oeuvre l'étape 21 du procédé décrit précédemment.

Les coefficients lissés sont utilisés dans un filtre H2 d'un estimateur 46 pour former un second pseudo-écho qui met en oeuvre l'étape 26 décrite précédemment.

Cet estimateur 46 génère, à partir du filtre H2 $H_2(n) = [h_{2,0}(n), h_{2,1}(n), ..., h_{2,L-1}(n)]^T$ dont les coefficients sont lissés, le second pseudo-écho $z_2(n)$ selon l'expression suivante :

$$z_2(n) = \sum_{i=0}^{L-1} h_{2,i}(n)x(n-i)$$

Le second pseudo-écho $z_2(n)$ forme la sortie de l'unité 40, c'est-à-dire l'écho estimé pour le signal émis x(n).

Ensuite, le module 38 comporte une unité 48 d'estimation de propriétés du second pseudo-écho, telles que des propriétés d'enveloppe spectrale.

L'unité 48 met en oeuvre l'étape 28 décrite précédemment et comporte, dans l'exemple, un calcul d'un modèle autorégressif, dit modèle AR qui permet d'estimer l'enveloppe spectrale du signal. Alternativement, l'unité 28 met en oeuvre un calcul de la fréquence fondamentale du second pseudo-écho ou toute autre méthode permettant d'extraire une propriété propre au second pseudo-écho.

Ces propriétés étant déterminées à partir du pseudo-écho et non à partir du signal émis x(n), elles tiennent compte de l'estimation du canal acoustique H. Plus précisément, ces propriétés prennent en compte l'estimation de la coloration spectrale du canal acoustique.

En outre, l'utilisation de deux pseudo-échos permet de s'affranchir des modifications instantanées et d'obtenir une estimation robuste du canal acoustique même lors de pics de forte puissance.

Dans l'exemple, l'unité 48 calcule un modèle AR d'ordre P du second pseudo-écho $z_2(n)$ selon l'équation suivante :

$$e_{z2}(n) = z_2(n) - \sum_{i=1}^{P} a_i z_2(n-i)$$

$e_{z2}(n)$ est le résidu de prédiction, et les coefficients $(a_i)_{1 \leq i \leq P}$ sont calculés dans le but de minimiser la puissance $E\{e_{z2}(n)^2\}$ de $e_{z2}(n)$ .

Dans le cas où $z_2(n)$ est un signal de parole, il est au mieux stationnaire sur de courtes périodes de quelques dizaines de millisecondes. Les coefficients $(a_i)_{1 \leq i \leq P}$ doivent donc être mis à jour régulièrement. Plusieurs algorithmes permettent de calculer ces coefficients, parmi lesquels les algorithmes de filtrage adaptatif (LMS - NLMS ou Bloc NLMS) ou encore la résolution de l'équation de Yule-Walker par l'algorithme de Levinson-Durbin. Les algorithmes dits Bloc NLMS et Levinson-Durbin effectuent le calcul sur des trames durant lesquelles le signal est supposé stationnaire. Dans l'exemple, l'unité 48 utilise l'algorithme de Levinson-Durbin sur des trames de 20 ms.

Pour une fréquence d'échantillonnage égale à 8000 Hz, on admet qu'un ordre p inférieur à 10 est généralement suffisant pour modéliser l'enveloppe spectrale.

Ainsi, le signal $e_{z2}(n)$ et les coefficients $(a_i)_{1 \le i \le P}$ sont tous deux représentatifs des propriétés du second pseu-do-écho $z_2 (n)$ et l'un comme l'autre peuvent être utilisés. Dans l'exemple, on utilise le signal $e_{z2}(n)$.

En outre, le module 38 comporte une unité 50 d'estimation des mêmes propriétés sur le signal microphonique y(n).

Ce module 50 met en oeuvre l'étape 30 du procédé décrit précédemment en effectuant, sur le signal microphonique, les mêmes opérations que celles réalisées par le module 48.

Dans la mesure où le modèle AR calculé par le module 48 est représentatif de l'enveloppe spectrale du signal d'écho estimé, une implémentation avantageuse consiste à réutiliser ce modèle pour l'appliquer sur le signal y(n) comme cela est représenté sur la figure 4. Ainsi, le module 50 délivre des propriétés du signal acoustique sous la forme d'un résidu $e_y(n)$ selon l'expression suivante :

$$e_y(n) = y(n) - \sum_{i=1}^{P} a_i\, y(n-i).$$

En conséquence, si le signal microphonique y(n) contient de l'écho seul, le modèle AR sera bien adapté et les résidus $e_{z2}(n)$ et $e_y(n)$ seront « comparables ». Par contre, si un autre signal, tel que du bruit ou de la parole utile, se rajoute au signal microphonique, le modèle AR ne sera pas adapté et les résidus seront « différents ».

Les résidus $e_{z2}(n)$ et $e_y(n)$ sont ensuite transmis à une unité 52 de comparaison et de commande du filtre d'annulation d'écho.

Cette unité 52 reçoit donc en entrée les informations représentatives des propriétés du second pseudo-écho et du signal microphonique pour déterminer la probabilité de la présence d'un signal utile, c'est-à-dire la probabilité qu'il y ait un signal autre qu'un signal d'écho dans le signal microphonique.

Lorsque le signal microphonique est composé seulement d'écho, les propriétés de l'écho estimé et du signal microphonique sont théoriquement semblables. Par contre, en présence d'un signal supplémentaire au niveau du terminal, tel que par exemple du bruit ou de la parole utile à transmettre, les propriétés calculées sur le signal microphonique ne sont plus comparables à celles calculées sur le second pseudo-écho.

En fonction du type de propriétés utilisées, une ou plusieurs règles d'analyse permettent de déterminer si un signal autre que de l'écho est présent dans le signal microphonique. Si tel est le cas, une période susceptible d'être une période de double parole est détectée. L'unité 52 commande alors le système d'annulation d'écho afin, notamment, de figer l'adaptation du filtre 36 d'annulation d'écho pour éviter toute désadaptation.

Comme indiqué précédemment, dans l'exemple, l'unité 52 prend en entrée les signaux résiduels $e_{z2}(n)$ et $e_y(n)$ afin de déterminer la présence de double parole. Dans cette implémentation, l'unité 52 est adaptée pour comparer les puissances $E\{e_{z2}(n)^2\}$ et $E\{e_y(n)^2\}$ de ces résidus. Ces grandeurs peuvent être estimées de diverses façons et notamment, par un lissage exponentiel qui est une technique peu coûteuse en temps de calcul, selon les équations suivantes :

$$\text{Estimation de } E\{e_{z2}(n)^2\} : \sigma^2_{e_{z2}}(n) = \lambda \cdot \sigma^2_{e_{z2}}(n-1) + (1-\lambda) \cdot e_{z2}(n)^2$$

$$\text{Estimation de } E\{e_y(n)^2\} : \quad \sigma^2_{e_y}(n) = \lambda \cdot \sigma^2_{e_y}(n-1) + (1-\lambda) \cdot e_y(n)^2.$$

Dans ces équations, on prend $\lambda$ proche de 1, par exemple égal à $\lambda = 0.9961$, ce qui, pour une fréquence d'échantillonnage de 8000 Hz, correspond à une constante de temps de 32 ms.

En période d'écho seul, les puissances des deux signaux résiduels $e_{z2}(n)$ et $e_y(n)$ sont comparables.

En période de double parole, l'enveloppe spectrale du signal d'écho, additionnée au signal de parole utile est différente de celle de l'écho seul. Aussi, le résidu $e_y(n)$ contient de l'énergie dans les zones non modélisées par le modèle AR défini à partir de l'écho estimé, de sorte que la puissance de $e_y(n)$ doit être supérieure à celle de $e_{z2}(n)$.

Ainsi, la comparaison peut être effectuée sur la base du ratio $\eta(n)$ entre les puissances $\sigma^2_{e_{z2}}(n)$ et $\sigma^2_{e_y}(n)$, dont l'expression à l'instant n est la suivante :

$$\eta(n) = \frac{\sigma^2_{\hat{e}_{z2}}(n)}{\sigma^2_{\hat{e}_y}(n)}$$

Une simple règle de comparaison de $\eta$ (n) à un seuil T permet de détecter les périodes susceptibles d'être des périodes de double parole, selon la règle suivante :

si $\eta(n) < T$ => risque de double parole

sinon => absence de double parole

La valeur de T peut être fixée de façon empirique et doit être déterminée en fonction d'un taux de fausse alarme toléré. Dans cet exemple, le seuil de détection est fixe mais on peut envisager une règle adaptative. On peut également envisager un système de maintien de la décision de risque de double parole (« *hangover »)* comme cela est classiquement rencontré dans les détecteurs d'activité vocale.

En outre, une temporisation permet de court-circuiter l'unité de commande 52 durant les premières secondes d'adaptation du filtre, afin d'éviter de geler l'adaptation. Cette temporisation est active en début de traitement et après tout contrôle du filtre adaptatif qui implique une mise à zéro du pas ou une remise à zéro des coefficients.

La commande est émise par l'unité 52 vers le filtre 36 d'annulation d'écho. Ce filtre peut être n'importe quel type de filtre devant être modifié selon que l'on puisse être dans une situation de double parole ou pas. Ce filtre peut être adaptatif ou pas, et comprendre ou pas un traitement non linéaire.

Dans l'exemple, lorsque le module 52 a décidé d'une absence de parole locale, les coefficients H1 du filtre 42 qui sont adaptés en permanence, sont simplement transmis au filtre 36. A contrario, lorsque le module 52 a détecté une présence de parole locale, le filtre 36 n'est pas réactualisé et les valeurs de ses coefficients sont figées.

Bien entendu, il est également possible de commander le filtre 36 autrement et notamment d'utiliser un filtre adaptatif indépendant des filtres 42 et 46, dont l'adaptation est figée ou autorisée suivant la décision du module 52 de détection de double parole.

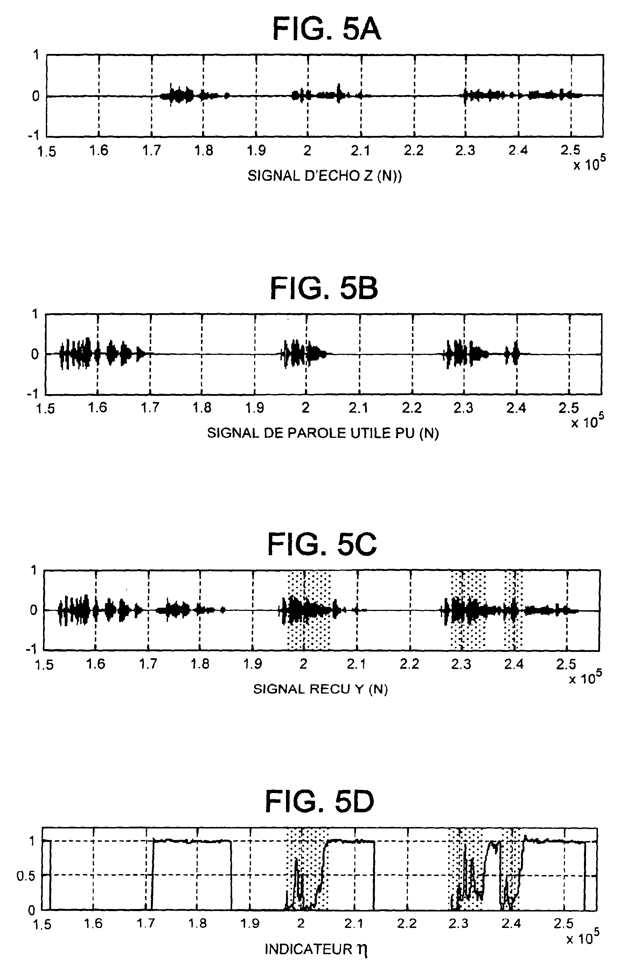

Les figures 5A à 5D représentent des résultats obtenus grâce au procédé de la figure 3 et au système de la figure 4 dans le cadre de l'annulation d'écho acoustique appliquée à de la communication parlée.

La fréquence d'échantillonnage est de 8000 Hz. Le canal acoustique est connu et de longueur 512 points, le filtre adaptatif 42 est de longueur L= 256. Le rapport écho à bruit, c'est-à-dire le rapport entre la puissance de l'écho et la puissance de la parole utile, est de l'ordre de -3 dB.

La courbe de la figure 5A représente le signal d'écho z(n), la courbe de la figure 5B représente la parole utile pu(n) et la courbe de la figure 5C représente le signal microphonique y(n).

La courbe représentée sur la figure 5D représente le ratio $\eta$ utilisé pour détecter les périodes de double parole potentielles. Sur les figures 5C et 5D, les zones grisées correspondent aux périodes de double parole.

La courbe de la figure 5D montre bien que la grandeur $\eta$ est proche de 1 en période d'écho seul. Dans les périodes d'absence d'écho, l'évolution de $\eta$ n'a pas d'importance et a été masquée sur cette représentation. En période de double parole, la grandeur $\eta$ diminue et devient largement inférieure à 1 permettant aisément de détecter la présence d'un signal autre que l'écho au niveau du terminal 2. Bien entendu, la sensibilité du système est paramétrable par le seuil. Dans ce cas, on peut par exemple choisir une valeur de seuil de 0.5, qui implique une mise à zéro du pas d'adaptation pendant les périodes de double parole :

si $\eta(n) < 0.5 \Rightarrow$ double parole potentielle

sinon $\Rightarrow$ écho pur potentiel

Ce critère permet de détecter les zones de double parole potentielles les plus énergétiques et donc les plus susceptibles d'entraîner une divergence du filtre adaptatif.

Bien entendu, d'autres modes de réalisation sont également possibles. Notamment, dans une variante, la détermination de l'écho estimé met en oeuvre un unique étage de filtrage adaptatif sans lissage temporel. Dans ce cas, les propriétés de l'écho estimé sont directement évaluées sur le signal de sortie du filtre adaptatif.

Il est également possible d'obtenir le canal acoustique moyen autrement que par un lissage temporel. Par exemple, il est possible d'utiliser la méthode des moindres carrés sur une fenêtre temporelle importante pour obtenir une évaluation de la fonction de transfert du canal acoustique qui soit déjà moyennée dans le temps.

Par ailleurs, l'invention peut être mise en oeuvre au moyen d'un logiciel ou de parties de logiciels comportant des instructions de code qui, lorsqu'elles sont exécutées par un calculateur, entraînent la mise en oeuvre du procédé de l'invention. Un tel logiciel peut notamment être stocké dans la mémoire d'un microprocesseur ou d'un processeur de traitement de signaux (DSP).

Il est aussi possible d'utiliser un composant dédié tel qu'un composant programmé destiné à être intégré dans un dispositif tel qu'un téléphone.

**Revendications**

1. Procédé de commande d'un filtre d'annulation d'écho (36) comprenant :

   - une détermination (22) de coefficients (H1) d'un filtre adaptatif (42) représentatif d'un canal acoustique entre un signal acoustique émis et un signal microphonique
   - un lissage temporel (24) des coefficients dudit filtre adaptatif;
   - une détermination (26) d'un écho estimé ($z_2(n)$) par le filtrage du signal acoustique ($x(n)$) émis avec lesdits coefficients lissés;

     - une estimation (28) de propriétés d'enveloppe spectrale dudit écho estimé ;
     - une estimation (30) des mêmes propriétés d'enveloppe spectrale sur le signal microphonique ($y(n)$) ;
     - une comparaison (32) entre lesdites propriétés de l'écho estimé et lesdites propriétés du signal microphonique pour évaluer la présence d'un signal ($pu(n)$) autre qu'un signal d'écho ($z(n)$) dans le signal microphonique ; et
     - une commande (34) pour figer une adaptation du filtre d'annulation d'un écho dans le signal microphonique, lorsque la présence d'un signal autre qu'un signal d'écho dans le signal microphonique est détectée.

2. Procédé selon la revendication 1, dans lequel ladite estimation de propriétés de l'écho estimé et ladite estimation de propriétés du signal microphonique comprennent chacune une modélisation auto-régressive (AR).

3. Procédé selon la revendication 2, dans lequel la modélisation auto-régressive du signal microphonique comprend l'application, au signal microphonique, des paramètres de la modélisation auto-régressive de l'écho estimé.

4. Procédé selon l'une quelconque des revendications 2 et 3, dans lequel ladite estimation de propriétés de l'écho estimé comprend en outre la détermination d'un résidu de prédiction ($e_{Z2}(n)$) issu d'une prédiction de l'écho estimé par le modèle auto-régressif correspondant et ladite estimation de propriétés du signal microphonique comprend en outre la détermination d'un résidu de prédiction ($e_Y(n)$) issu d'une prédiction du signal microphonique par le modèle auto-régressif correspondant.

5. Procédé selon l'une quelconque des revendications 1 à 4, dans lequel la comparaison des propriétés de l'écho estimé et des propriétés du signal microphonique comprend la formation d'un indicateur ($\eta(n)$) représentant la probabilité que le signal microphonique comprenne uniquement un signal d'écho correspondant au signal émis.

6. Procédé selon l'une quelconque des revendications 1 à 5, dans lequel ladite commande d'un filtre d'annulation comprend le contrôle des variations dudit filtre en fonction de la présence d'un signal autre que le signal d'écho dans le signal microphonique.

7. Programme pour un dispositif de commande d'un filtre d'annulation d'écho comprenant des instructions ou portions d'instruction qui, lorsqu'elles sont exécutées par un calculateur d'un dispositif de commande d'un filtre d'annulation d'écho, entraînent l'exécution d'un procédé selon l'une quelconque des revendications 1 à 6.

8. Dispositif de commande (38) d'un filtre d'annulation d'écho comprenant :

   - des moyens (42) de détermination de coefficients (H1) d'un filtre adaptatif représentatif d'un canal acoustique entre un signal acoustique émis et un signal microphonique;
   - des moyens (44) de lissage temporel des coefficients dudit filtre adaptatif;
   - des moyens de détermination (46) d'un écho estimé ($z_2(n)$) par le filtrage du signal acoustique ($x(n)$) émis avec lesdits coefficients lissés;
   - des moyens (48) d'estimation de propriétés d'enveloppe spectrale dudit écho estimé ;
   - des moyens (50) d'estimation des mêmes propriétés d'enveloppe spectrale sur le signal microphonique ($y(n)$) ;
   - des moyens (52) de comparaison entre lesdites propriétés de l'écho estimé et lesdites propriétés du signal microphonique pour évaluer la présence d'un signal ($pu(n)$) autre qu'un signal d'écho ($z(n)$) dans le signal microphonique; et

- des moyens (52) de commande pour figer une adaptation du filtre d'annulation d'écho pour le signal microphonique lorsque la présence d'un signal autre qu'un signal d'écho dans le signal microphonique est détectée.

**9.** Système de communication comprenant au moins un terminal (2) présentant un canal acoustique entre un haut-parleur (6) diffusant un signal émis (x(n)), et un microphone (8) apte à acquérir un signal microphonique (y(n)), dans lequel ledit terminal comprend un filtre d'annulation d'écho (36) entre le signal émis et le signal microphonique et un dispositif de commande (38) du filtre d'annulation d'écho selon la revendication 8.

**10.** Terminal de communication (2) présentant un canal acoustique entre un haut-parleur (6) diffusant un signal émis (x(n)), et un microphone (8) apte à acquérir un signal microphonique (y(n)), comprenant un filtre d'annulation d'écho (36) entre le signal émis et le signal microphonique et un dispositif de commande (38) du filtre d'annulation d'écho selon la revendication 8.

**Patentansprüche**

**1.** Verfahren zur Steuerung eines Echounterdrückungsfilters (36), das enthält:

- eine Bestimmung (22) von Koeffizienten (H1) eines adaptiven Filters (42), das für einen Akustikkanal zwischen einem gesendeten Akustiksignal und einem Mikrofonsignal repräsentativ ist,
- ein zeitliches Glätten (24) der Koeffizienten des adaptiven Filters;
- eine Bestimmung (26) eines geschätzten Echos ($z_2(n)$) durch die Filterung des gesendeten Akustiksignals ($x(n)$) mit den geglätteten Koeffizienten;
- eine Schätzung (28) von spektralen Hüllkurveneigenschaften des geschätzten Echos;
- eine Schätzung (30) der gleichen spektralen Hüllkurveneigenschaften am Mikrofonsignal ($y(n)$);
- ein Vergleich (32) zwischen den Eigenschaften des geschätzten Echos und den Eigenschaften des Mikrofonsignals, um das Vorhandensein eines anderen Signals ($pu(n)$) als eines Echosignals ($z(n)$) im Mikrofonsignal zu ermitteln; und
- eine Steuerung (34), um eine Anpassung des Unterdrückungsfilters eines Echos im Mikrofonsignal einzufrieren, wenn das Vorhandensein eines anderen Signals als eines Echosignals um Mikrofonsignal erfasst wird.

**2.** Verfahren nach Anspruch 1, wobei die Schätzung von Eigenschaften des geschätzten Echos und die Schätzung von Eigenschaften des Mikrofonsignals je eine autoregressive Modellisierung (AR) enthalten.

**3.** Verfahren nach Anspruch 2, wobei die autoregressive Modellisierung des Mikrofonsignals die Anwendung der Parameter der autoregressiven Modellisierung des geschätzten Echos an das Mikrofonsignal enthält.

**4.** Verfahren nach einem der Ansprüche 2 und 3, wobei die Schätzung von Eigenschaften des geschätzten Echos außerdem die Bestimmung eines Vorhersagerests ($e_{Z2}(n)$) enthält, der von einer Vorhersage des geschätzten Echos durch das entsprechende autoregressive Modell stammt, und die Schätzung von Eigenschaften des Mikrofonsignals außerdem die Bestimmung eines Vorhersagerests ($e_y(n)$) enthält, der von einer Vorhersage des Mikrofonsignals durch das entsprechende autoregressive Modell stammt.

**5.** Verfahren nach einem der Ansprüche 1 bis 4, wobei der Vergleich der Eigenschaften des geschätzten Echos und der Eigenschaften des Mikrofonsignals die Bildung eines Indikators ($\eta(n)$) enthält, der die Wahrscheinlichkeit darstellt, dass das Mikrofonsignal nur ein dem gesendeten Signal entsprechendes Echosignal enthält.

**6.** Verfahren nach einem der Ansprüche 1 bis 5, wobei die Steuerung eines Unterdrückungsfilters die Überwachung der Schwankungen des Filters abhängig vom Vorhandensein eines anderes Signals als des Echosignals im Mikrofonsignal enthält.

**7.** Programm für eine Vorrichtung zur Steuerung eines Echounterdrückungsfilters, das Anweisungen oder Anweisungsanteile enthält, die, wenn sie von einem Rechner einer Steuervorrichtung eines Echounterdrückungsfilters ausgeführt werden, die Ausführung eines Verfahrens nach einem der Ansprüche 1 bis 6 veranlassen.

**8.** Steuervorrichtung (38) eines Echounterdrückungsfilters, die enthält:

- Einrichtungen (42) zur Bestimmung von Koeffizienten (H1) eines adaptiven Filters, das für einen Akustikkanal zwischen einem gesendeten Akustiksignal und einem Mikrofonsignal repräsentativ ist;

- Einrichtungen (44) zum zeitlichen Glätten der Koeffizienten des adaptiven Filters;
- Einrichtungen (46) zur Bestimmung eines geschätzten Echos ($z_2(n)$) durch die Filterung des gesendeten Akustiksignals ($x(n)$) mit den geglätteten Koeffizienten;
- Einrichtungen (48) zur Schätzung von spektralen Hüllkurveneigenschaften des geschätzten Echos;
- Einrichtungen (50) zur Schätzung der gleichen spektralen Hüllkurveneigenschaften am Mikrofonsignal ($y(n)$);
- Einrichtungen (52) zum Vergleich zwischen den Eigenschaften des geschätzten Echos und den Eigenschaften des Mikrofonsignals, um das Vorhandensein eines anderen Signals ($pu(n)$) als eines Echosignals ($z(n)$) im Mikrofonsignal zu ermitteln; und
- Steuereinrichtungen (52), um eine Anpassung des Echounterdrückungsfilters für das Mikrofonsignal einzufrieren, wenn das Vorhandensein eines anderen Signals als eines Echosignals im Mikrofonsignal erfasst wird.

9. Kommunikationssystem, das mindestens ein Endgerät (2) enthält, das einen Akustikkanal zwischen einem Lautsprecher (6), der ein gesendetes Signal ($x(n)$) aussendet, und einem Mikrofon (8) aufweist, das ein Mikrofonsignal ($y(n)$) erfassen kann, wobei das Endgerät ein Echounterdrückungsfilter (36) zwischen dem gesendeten Signal und dem Mikrofonsignal und eine Steuervorrichtung (38) des Echounterdrückungsfilters nach Anspruch 8 enthält.

10. Kommunikationsendgerät (2), das einen Akustikkanal zwischen einem Lautsprecher (6), der ein gesendetes Signal ($x(n)$) aussendet, und einem Mikrofon (8) enthält, das ein Mikrofonsignal ($y(n)$) erfassen kann, das ein Echounterdrückungsfilter (36) zwischen dem gesendeten Signal und dem Mikrofonsignal und eine Steuervorrichtung (38) des Echounterdrückungsfilters nach Anspruch 8 enthält.

**Claims**

1. Method of controlling an echo cancellation filter (36) comprising:

   - determining (22) coefficients (H1) of an adaptive filter (42) representative of an acoustic channel between an emitted acoustic signal and a microphone signal
   - temporal smoothing (24) of the coefficients of the said adaptive filter;
   - determining (26) an estimated echo ($z_2(n)$) by filtering the emitted acoustic signal ($x(n)$) with the said smoothed coefficients;
   - estimating (28) spectral envelope properties of the said estimated echo;
   - estimating (30) the same spectral envelope properties on the microphone signal ($y(n)$);
   - comparing (32) between the said properties of the estimated echo and the said properties of the microphone signal so as to evaluate the presence of a signal ($pu(n)$) other than an echo signal ($z(n)$) in the microphone signal; and
   - controlling (34) a fixed adaptation of the filter for cancelling an echo in the microphone signal, when the presence of a signal other than an echo signal in the microphone signal is detected.

2. Method according to Claim 1, in which the said estimating of properties of the estimated echo and the said estimating of properties of the microphone signal each comprise an auto-regressive modelling (AR).

3. Method according to Claim 2, in which the auto-regressive modelling of the microphone signal comprises the application, to the microphone signal, of the parameters of the auto-regressive modelling of the estimated echo.

4. Method according to either one of Claims 2 and 3, in which the said estimating of properties of the estimated echo furthermore comprises the determining of a prediction residual ($e_{z2}(n)$) arising from a prediction of the estimated echo by the corresponding auto-regressive model and the said estimating of properties of the microphone signal furthermore comprises the determining of a prediction residual ($e_y(n)$) arising from a prediction of the microphone signal by the corresponding auto-regressive model.

5. Method according to any one of Claims 1 to 4, in which the comparing of the properties of the estimated echo and the properties of the microphone signal comprises the forming of an indicator ($\eta(n)$) representing the probability that the microphone signal comprises solely an echo signal corresponding to the emitted signal.

6. Method according to any one of Claims 1 to 5, in which the said controlling of a cancellation filter comprises the supervising of the variations of the said filter as a function of the presence of a signal other than the echo signal in the microphone signal.

7. Program for a device for controlling an echo cancellation filter comprising instructions or portions of instruction which, when they are executed by a computer of a device for controlling an echo cancellation filter, bring about the execution of a method according to any one of Claims 1 to 6.

8. Device (38) for controlling an echo cancellation filter comprising:

- means (42) for determining coefficients (H1) of an adaptive filter representative of an acoustic channel between an emitted acoustic signal and a microphone signal;
- means (44) for temporal smoothing of the coefficients of the said adaptive filter;
- means (46) for determining an estimated echo ($z_2(n)$) by filtering the emitted acoustic signal ($x(n)$) with the said smoothed coefficients;
- means (48) for estimating spectral envelope properties of the said estimated echo;
- means (50) for estimating the same spectral envelope properties on the microphone signal ($y(n)$);
- means (52) for comparing between the said properties of the estimated echo and the said properties of the microphone signal so as to evaluate the presence of a signal ($pu(n)$) other than an echo signal ($z(n)$) in the microphone signal; and
- control means (52) for controlling (34) a fixed adaptation of the filter for cancelling an echo in the microphone signal, when the presence of a signal other than an echo signal in the microphone signal is detected.

9. Communication system comprising at least one terminal (2) exhibiting an acoustic channel between a loudspeaker (6) broadcasting an emitted signal ($x(n)$), and a microphone (8) able to acquire a microphone signal ($y(n)$), in which the said terminal comprises an echo cancellation filter (36) between the emitted signal and the microphone signal and a device (38) for controlling the echo cancellation filter according to Claim 8.

10. Communication terminal (2) exhibiting an acoustic channel between a loudspeaker (6) broadcasting an emitted signal ($x(n)$), and a microphone (8) able to acquire a microphone signal ($y(n)$), comprising an echo cancellation filter (36) between the emitted signal and the microphone signal and a device (38) for controlling the echo cancellation filter according to Claim 8.

# FIG. 1
## (ETAT DE LA TECHNIQUE)

# FIG. 2
## (ETAT DE LA TECHNIQUE)

**FIG. 3**

FIG. 4

## FIG. 5A

SIGNAL D'ECHO Z (N))

## FIG. 5B

SIGNAL DE PAROLE UTILE PU (N)

## FIG. 5C

SIGNAL RECU Y (N)

## FIG. 5D

INDICATEUR η

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040161101 A
- EP 0854626 A
- US 5734715 A

**Littérature non-brevet citée dans la description**

- **P. AHGREN.** On system identification and acoustic echo cancellation. *Thesis UPPSALA Universitet,* Avril 2004